(19) Europäisches Patentamt / European Patent Office / Office européen des brevets

(11) **EP 2 832 134 B1**

(12) **EUROPEAN PATENT SPECIFICATION**

(45) Date of publication and mention
of the grant of the patent:
**10.08.2016 Bulletin 2016/32**

(51) Int Cl.:
***H04W 24/02*** *(2009.01)*

(21) Application number: **12873306.0**

(22) Date of filing: **28.03.2012**

(86) International application number:
**PCT/CN2012/073201**

(87) International publication number:
**WO 2013/143088 (03.10.2013 Gazette 2013/40)**

(54) **METHOD AND APPARATUS FOR INTER-CELL INTERFERENCE DETECTION**

VERFAHREN UND VORRICHTUNG ZUR ZWISCHENZELLINTERFERENZERKENNUNG

PROCEDE ET DISPOSITIF DE DETECTION D'INTERFERENCE INTERCELLULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.02.2015 Bulletin 2015/06**

(73) Proprietor: **Nokia Technologies Oy
02610 Espoo (FI)**

(72) Inventors:
• **ZHANG, Zhi
Beijing 100176 (CN)**
• **LEI, Yixue
Beijing 100088 (CN)**
• **ZHU, Jianchi
Beijing 100007 (CN)**

(74) Representative: **Nokia Corporation
Intellectual Property Department
Karakaari 7
02610 Espoo (FI)**

(56) References cited:
**WO-A1-2010/063325     WO-A1-2013/123643
WO-A1-2013/138985     CN-A- 101 242 221
US-A1- 2011 250 913     US-A1- 2013 195 012**

• **'3rd Generation Partnership Project, Technical
Specification Group Radio Access Networks,
lvolved Universal Terrestrial Radio Access
(E-UTRA), LTE TDD Home eNodeB RF
Requirements(Release 9)' 3GPP TR 36.922 V1.2.1
31 March 2010, XP050427843**

**Description**

BACKGROUND:

**Field:**

The long term evolution (LTE) of the third generation partnership project may benefit from a long term evolution local area network (LTE-LAN) system, such as a portable LTE-LAN system. Moreover, an LTE-LAN system may benefit from inter-cell interference (ICI) detection for inter portable LTE-LAN interference.

**Description of the Related Art:**

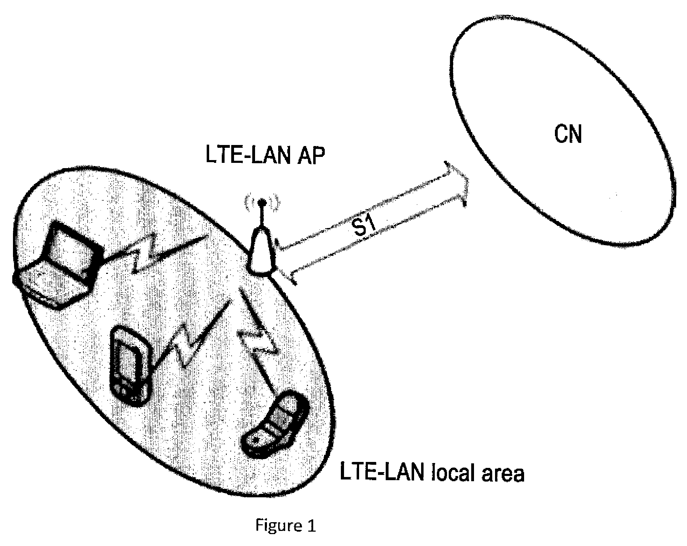

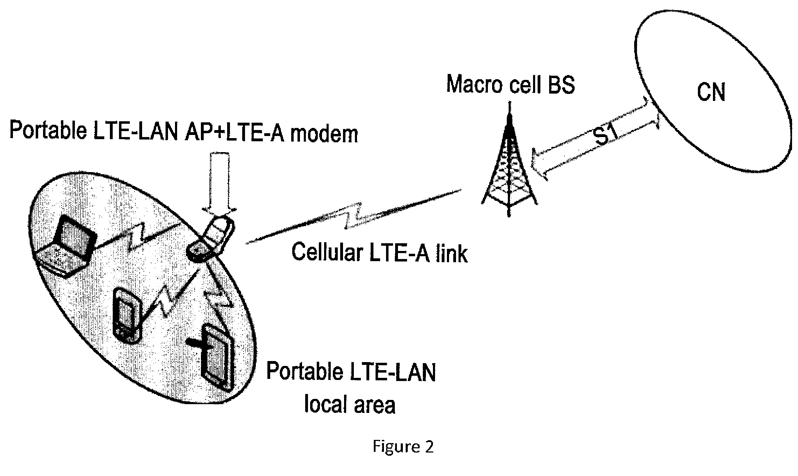

In general, a long term evolution local area network (LTE-LAN) can provide local area (LA) coverage for indoor, home, residential, and enterprise usage with, for example, fixed deployment. Figure 1 illustrates the architecture of an example of a fixed LTE-LAN.
As shown in Figure 1, the LTE-LAN access point (AP) can provide LTE-based wireless connections to local area devices and can be connected to the core network (CN) via an S1 interface. The mobile terminals can establish radio connections the LTE-LAN AP or with a macro eNode B (eNB). This architecture can be similar to a conventional LTE femto architecture, and can be suitable for fixed deployment in residential and enterprise scenarios.
In addition to fixed deployment with the architecture illustrated in Figure 1, another type of LTE-LAN architecture can also be provided, such as a portable LTE-LAN architecture. Figure 2 illustrates an example of a portable LTE-LAN architecture. As shown in Figure 2, the portable LTE-LAN AP can have double functionality: for LTE-LAN, it can serve as an access point; for the cellular network, it can serve as a regular UE or wireless modem. This kind of LTE-LAN AP can be embedded into a portable or mobile device and can access the core network (CN) through cellular link as a normal UE.
Known systems for determining inter-cell interference are known from the prior art: for instance from US2011/250913 A1.

SUMMARY:

The present invention is disclosed by the independent claims 1, 5, 10, 11 and 13. Further advantageous embodiments are disclosed by the dependent claims.
According to certain embodiments, a method includes measuring, with a first local access point, a first power of a first uplink sequence and a second power of a second uplink sequence from at least one user equipment. The method also includes determining that the first local access point and a second local access point are interfering with one another based on a comparison of the first power and the second power.
In certain embodiments, a method includes preparing an uplink sequence for transmission from a user equipment to an access point. The method also includes including in the uplink sequence, a common first part and a random second part. The method further includes initiating transmission of the uplink sequence to the access point.
A non-transitory computer-readable medium is, according to certain embodiments, encoded with instructions that, when performed in hardware, perform a process. The process includes measuring, with a first local access point, a first power of a first uplink sequence and a second power of a second uplink sequence from at least one user equipment. The process also includes determining that the first local access point and a second local access point are interfering with one another based on a comparison of the first power and the second power.
A non-transitory computer-readable medium is, in certain embodiments, encoded with instructions that, when performed in hardware, perform a process. The process includes preparing an uplink sequence for transmission from a user equipment to an access point. The process also includes including in the uplink sequence, a common first part and a random second part. The process further includes initiating transmission of the uplink sequence to the access point.
According to certain embodiments, an apparatus includes at least one processor and at least one memory including computer program code. The at least one memory and the computer program code are configured to, with the at least one processor, cause the apparatus at least to measure, with a first local access point, a first power of a first uplink sequence and a second power of a second uplink sequence from at least one user equipment. The at least one memory and the computer program code are also configured to, with the at least one processor, cause the apparatus at least to determine that the first local access point and a second local access point are interfering with one another based on a comparison of the first power and the second power.
An apparatus, in certain embodiments, includes at least one processor and at least one memory including computer program code. The at least one memory and the computer program code are configured to, with the at least one processor, cause the apparatus at least to prepare an uplink sequence for transmission from a user equipment to an access point. The at least one memory and the computer program code are also configured to, with the at least one processor, cause the apparatus at least to include in the uplink sequence, a common first part and a random second part. The at least one memory and the computer program code are further configured to, with the at least one processor, cause the apparatus at least to initiate transmission of the uplink sequence to the access point.

An apparatus according to certain embodiments includes measuring means for measuring, with a first local access point, a first power of a first uplink sequence and a second power of a second uplink sequence from at least one user equipment. The apparatus also includes determining means for determining that the first local access point and a second local access point are interfering with one another based on a comparison of the first power and the second power.

An apparatus, in certain embodiments, includes preparing means for preparing an uplink sequence for transmission from a user equipment to an access point. The apparatus also includes including means for including in the uplink sequence, a common first part and a random second part. The apparatus further includes initiating means for initiating transmission of the uplink sequence to the access point.

BRIEF DESCRIPTION OF THE DRAWINGS:

For proper understanding of the invention, reference should be made to the accompanying drawings, wherein:

Figure 1 illustrates the architecture of an example of a fixed LTE-LAN.
Figure 2 illustrates an example of a portable LTE-LAN architecture.
Figure 3 illustrates LTE-LANs in close proximity according to certain embodiments.
Figure 4 illustrates scheduled sequences according to certain embodiments.
Figure 5 illustrates ICI detection procedures according to certain embodiments.
Figure 6 illustrates a system according to certain embodiments.
Figure 7 illustrates a method according to certain embodiments.
Figure 8 illustrates another method according to certain embodiments.

DETAILED DESCRIPTION:

Referring to Figure 2, the portable LTE-LAN architecture can be realized with 3GPP system architecture evolution (SAE)/LTE specifications. The LTE-LAN access point is actually a combination of a user equipment and an access point. The portable LTE-LAN AP provisions a portable LTE cell to LTE-LAN UEs but there is no need to introduce S1 interface from the LTE-LAN access point to the core network. The portable LTE-LAN AP can terminate the radio bearers for LTE-LAN UEs. The traffic from the local LTE-LAN terminals to LTE-LAN access point can be multiplexed to data radio bearers (DRBs) of the user equipment connected with a macro eNB. The local bearers which have been terminated by the AP in the portable LTE-LAN cell can be transparent to the core network. The LTE-LAN radio interface, used between the local LTE-LAN terminals and LTE-LAN access point, may be slightly different from normal LTE.

Portable LTE-LAN is different from a 3G/LTE WiFi router. For example, the LTE-LAN can support more reliable data transmission over licensed spectrum, as compared to Wi-Fi.

With a portable LTE-LAN architecture, some local area specific features can be realized. One feature is that an LTE-LAN access point implemented with the user equipment can enable local data exchange without involving an eNB. Another feature is that multiple local LTE-LAN terminals can share the macro connection of the user equipment with the portable LTE-LAN access point to access the macro network. Compared with a relatively wide area, such as a macro cell, a local area can have a small coverage, which permits very low transmit power from both the access point and the user equipment. Therefore, flexible user equipment to user equipment data exchange and power saving can both be achieved with such portable LTE-LAN architecture.

Long term evolution local area network (LTE-LAN) devices, such as portable LTE-LAN devices, can experience inter-cell interference. This inter-cell interference can be relatively static in the case of fixed or stationary LTE-LAN devices, but can be significantly dynamic in the case of portable or mobile LTE-LAN devices. There are a variety of ways that inter-cell interference can be addressed.

One approach is to apply global positioning system (GPS) based device-to-device (D2D) pairing. For this method, a network can utilize GPS information to pair devices so that two nearby devices can construct direct D2D link to communicate with each other. Similarly, if the network finds two portable LTE-LAN APs that are close to each other through their GPS information, the eNodeB (eNB) can then coordinate these two portable LTE-LANs to avoid ICI utilizing, for example, release 10 (rel-10) type enhanced inter-cell interference coordination (eICIC).

Another approach is to use a downlink broadcasting signal based method, as used in a heterogeneous network (Hetnet). In Hetnet, since there is no direct interface, such as an X2 interface, assumed between a home eNB and a macro eNB, there are some methods for a home eNB or a user equipment to avoid ICI. On the home eNB side, a downlink receiver can be installed in the home eNB so that when home eNB powers on, the home eNB can detect the macro eNB downlink broadcasting signals, such as broadcast channel (BCH) and then the home eNB can intentionally avoid interference from the macro eNB.

Similarly, a portable LTE-LAN access point can also install a downlink receiver, with the LTE-LAN local radio, to cyclically detect potential downlink broadcasting signals from a nearby portable LTE-LAN access point. If detected, then the LTE-LAN access point can request a macro eNB to coordinate ICI between nearby portable LTE-LANs.

With respect to the user equipment side, the macro or home eNB can configure its served user equipment to detect or listen to a neighbor cell's downlink signals, such as broadcast channel (BCH) information. Then the user equipment can report such information to its serving cell, such as a macro or home eNB. When serving cell get the information of interfering cells, it can schedule interfered user equipment out of the interfering area.

Similarly, a portable LTE-LAN can also configure its served UEs to detect a potential nearby LTE-LAN's downlink signal. If detected, the UEs can report it to their serving access point. Then the serving access point can perform ICI coordination with the help of a macro eNB.

However, considering the characteristics of portable LTE-LAN, letting served UE detect nearby LTE-LAN's signals may not fully address ICI. When two portable LTE-LANs are very close to each other, the downlink as well as uplink channels may be severely interfered. In that case, the UE detecting accuracy as well as the UE reporting successful ratio may be low.

Thus, among other things, certain embodiments address a scenario that can arise, for example, when two or more portable LTE-LANs are close to each other. Specifically, certain embodiments address how the ICI between or among them can be handled.

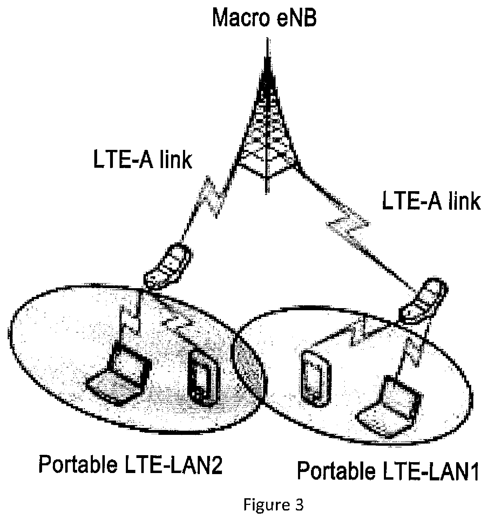

Figure 3 illustrates LTE-LANs in close proximity according to certain embodiments. For a fixed deployment, this kind of ICI can be addressed by an ICI coordination mechanism. Since all portable LTE_LANs may be connected to eNBs, in case some portable LTE-LANs are interfering with each other, ICI coordination through eNB is a potential way of addressing ICI. However, the inherent mobility nature of portable LTE-LANs, just like a regular LTE-A user equipment, makes such ICI occur in an unpredictable way, from a system perspective, since it purely or primarily depends on users' behavior. In order for the eNB to coordinate two or more portable LTE-LANs to suppress this kind of ICI, several factors can be considered.

Accordingly certain embodiments address how to detect the occurrence of the event that large ICI is generated due to nearby portable LTE-LANs. Likewise, certain embodiments address determination of which portable LTE-LANs are interfering with each other.

More particularly, certain embodiments provide that a portable LTE-LAN AP schedules its served UE to send a predefined uplink (UL) ICI awareness sequence on a predefined UL radio resource. The UL ICI awareness sequence can include two parts. Part 1 can be a sequence which is the same for all portable LTE-LANs. Part 2 can be a sequence which is different for different portable LTE-LANs. The portable LTE-LAN AP can know if it is interfered with nearby portable LTE-LAN(s) through detecting the power of UL ICI awareness sequence part 1 and part 2.

There can be multiple predetermined radio resource for UE(s) to send UL ICI awareness sequence(s). Multiple UEs can be scheduled to send the UL sequence on multiple predetermined resources, but there can be just one UE to send this sequence for each resource.

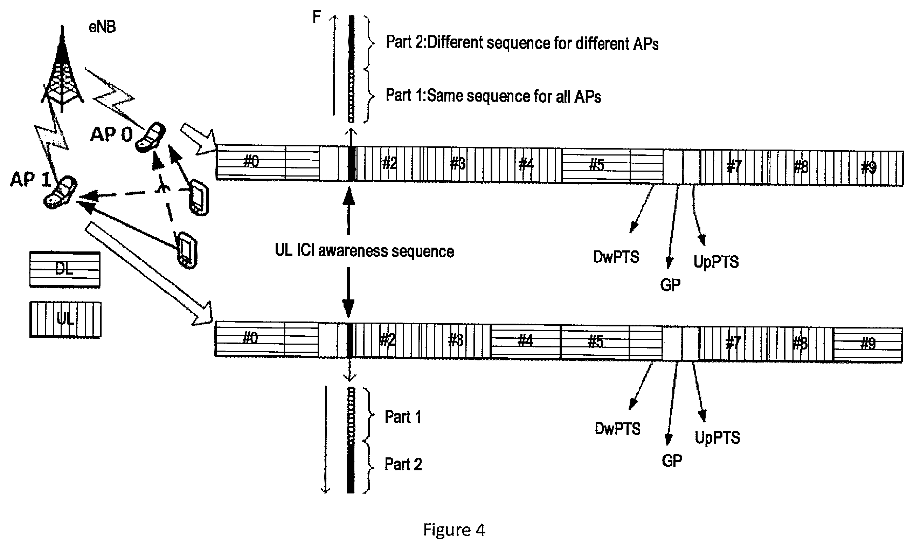

Figure 4 illustrates scheduled sequences according to certain embodiments. Figure 4 gives one example of our main idea. In Figure 4, portable LTE-LAN AP0 and AP1 are illustrated as interfering with each other. AP0 and AP1 are, in this example, using different time division duplex (TDD) configurations. AP0 and AP1 are, in this example, configuring their served UEs to send an uplink (UL) ICI awareness sequence on the last symbol of UpPTS in SF #1 and predefined band. This approach does not require GPS information and can utilize an UL signal instead of DL signal.

In LTE, an eNB can also configure the UE to send a sounding reference signal (SRS) on a given time and frequency resource. However, in certain embodiments the predetermined radio resource for transmitting the UL ICI awareness sequence can be the same for all portable LTE-LANs, while different eNBs can configure SRS independently. Likewise, in certain embodiments the UL ICI awareness sequence includes two or more parts as described above, while the SRS from one UE can be one sequence.

Certain embodiments provide a way to select the predefined radio resource for UL ICI awareness sequence. As shown in Figure 4, the radio resource can be defined in central resource blocks (RBs), such as 6 RBs, in the last symbol of subframe 1. Since subframe I can always be a special subframe for different TDD configurations, the last symbol (UpPTS) can always be used to transmit UL signals by the UE and the use of central RBs can avoid different bandwidth configurations among different portable LTE-LANs.

The last symbol in SF #1 can always be available according to current TDD configuration. However, there can be other configurations for the pre-determined resource in other TDD configurations.

Likewise, certain embodiments provide a way to generate a UL ICI awareness sequence. This sequence can use a pseudo-random sequence, such as a gold sequence used for LTE rel-8 & 9 DMRS port 5. Then different seeds can be selected to generate UL sequence Part 1 and Part 2.

A common seed can trigger a sequence for all portable LTE-LANs, such as:

$$c_{\text{init}} = \left( \lfloor n_{\text{s}} / 2 \rfloor + 1 \right) \cdot \left( 1025 \right) \cdot 2^{17} \tag{1}$$

in which $n_{\text{s}}$ represents the slot number. A sequence initialized by the seed in (1) can be used as Part 1 of the UL ICI awareness sequence.

The physical cell identifier (PCI), which can be MeNB's PCI that the portable AP associates to this MeNB, and a 16-bit portable AP temporary identifier (PATI) can be combined as the seed in (2) to trigger Part 2 of UL ICI awareness sequence, as:

$$c_{\text{init}} = \left( \lfloor n_{\text{s}} / 2 \rfloor + 1 \right) \cdot \left( 2cell\_id + 1 \right) \cdot 2^{16} + PATI \tag{2}$$

The MeNB can assign this 16-bit PATI to the UE with a portable AP on its access to the MeNB. The assignment of this PATI can be made within the MeNB. Different UEs with the portable AP can be assigned different PATIs within one MeNB. Different MeNBs can assign PATIs to UEs with portable AP independently. The PATI combined with the cell id can avoid seeds collision among different portable LTE-LANs. The PATI can be part of the UL sequence seed information as the portable AP configures them to its served UEs. The served UEs of multiple APs, such as all APs in a geographic region may be configured to transmit the sequence at the same time on the same frequency resource.

Certain embodiments also provide a way to detect the ICI from the sequence. The detection of ICI from nearby portable LTE-LAN can include two steps. First, the portable AP can decide whether or not there are nearby interfering portable LTE-LAN(s). The portable LTE-LAN AP can measure the received power for the UL sequence Part 1 and Part 2 separately. If power (Part 1) - power (Part 2) < predetermined criterion, then the AP can determine that there is no nearby interfering LTE-LAN. Otherwise if power (Part 1) - power (Part 2) > predetermined criterion, then the AP can determine that there is nearby interfering LTE-LAN(s), and the LTE-LAN AP will report it to the MeNB.

Second, the MeNB and portable APs can decide which LTE-LANs are interfering with each other. There can be many portable APs reporting ICI occurrence to the MeNB simultaneously. Indeed, interference may be a greater concern to the APs when there many APs in a local area. The MeNB can partition the APs into some candidate sets. Each candidate set can include the portable APs that are potentially interfering with each other. The MeNB can do such a partition through many ways: one example is that eNB can compare {power (Part 1) - power (Part 2)} from many APs; APs with similar power difference are likely to interfere with each other; another example would use channel quality indicator (CQI) (either uplink or downlink), if the APs are close to each other, their corresponding CQI should be similar.

To provide even more precision, the MeNB can obtain further confrmation. The MeNB can configure other APs' UL sequence seeds to APs inside one candidate set. Portable APs can measure power (Part 2) using the configured seeds and can report the measurement to the MeNB. If the measured power (Part 2) exceeds a criterion, the MeNB can confirm which APs are interfering with each other.

The following provides an example of such a procedure. Assuming AP0 (seed 0 for UL sequence Part 2) and AP1 (seed 1 for UL sequence Part 2) are partitioned into one candidate set. In this example, the eNB configures seed 0 to AP1 and seed 1 to AP0. AP0 measures power (Part 2) on seed 1 and AP1 measures power (Part 2) on seed 0, and then both APs report measurement results to MeNB. If the measured power (Part 2) in AP0 and the measured power (Part2) in AP1 both exceed the criterion, then the MeNB can confirm that AP0 and AP1 are interfering with each other.

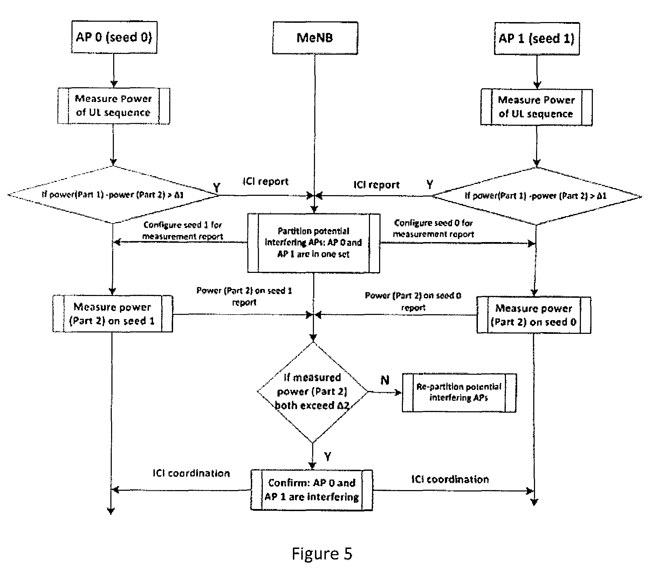

Figure 5 illustrates ICI detection procedures according to certain embodiments. In the figure, there are shown two APs, AP0 (seed 0) and AP1 (seed 1), which are assumed to be interfering with one another.

As shown in Figure 5, the power of an UL sequence can be measured for each of AP0 and AP1. If the power of part 1 is greater than the power of part 2 by a certain threshold amount, then the two APs can be partitioned into one set. Meanwhile, the two APs can have their seed changed, and the power of Part 2 can be re-measured and compared. If the measured power (Part 2) for both APs is not greater than a given threshold, then the APs can be repartitioned. However, if the measured power is greater than the given threshold for both APs even after the seed change, then a determination can be made that AP0 and AP1 are interfering with one another.

Once the MeNB confirms which APs are interfering with each other, the MeNB can coordinate these APs to avoid ICI though various techniques such as, for example, coordinated scheduling or dynamic point blanking.

Even when there are more than two interfering portable LTE-LANs, the detection procedures can be very similar to those in Figure 5. The MeNB can configure multiple potential seeds to AP and ask the AP to report measured power (Part 2) to the MeNB. Based on the reporting, the MeNB can decide if these APs are interfering with each other.

Certain embodiments, therefore, do not place restrictions on AP's scheduling prior to determining that interference exists. For example, an AP may only be able to detect other APs' DL signals when its own DL is vacant, but certain embodiments do not require the APs to detect other APs' DL signals.

Certain embodiments can be applied in situations where different portable LTE-LANs have independent TDD configurations. Moreover, certain embodiments can be time efficient, having, for example, a detection cycle of 10 ms or less. If there are more than two portable LTE-LANs interfering with one another, certain embodiments can still identify the interference and provide a properly coordinated resolution.

In certain alternative embodiments, the UL ICI awareness sequence can have three or more parts. Part 1 and Part 2 can be as described above. Part 3 can be a sequence based on a 9-bit portable AP group id (PAGI). For example, the seed of Part 3 can be designed as:

$$c_{\text{init}} = \left( \lfloor n_s/2 \rfloor + 1 \right) \cdot \left( 2PAGI \right) \cdot 2^{17} \qquad (3)$$

The MeNB can construct a relationship between the PATIs and the PAGIs. For example, one PAGI can correspond to a given number of PATIs. With PAGI and Part 3, a portable AP can detect the power difference between Part 1 and Part 3, and then deduce if the ICI is from an AP with the same PAGI, which can help the MeNB to increase the accuracy in the initial partitioning of potential interfering APs.

If two portable LTE-LAN APs, which can be referred to as AP1 and AP2, are nearby and one AP, for example AP1, does not serve any UE, or served UEs are in long cycle DRX/DTX mode, then there does not need to be any UL ICI awareness sequence for AP1. Thus, AP2 may not be aware that AP1 is nearby. However, AP specific downlink reference signals, for example, CRS or CSI-RS may be severely interfering with each other. UEs served by AP2 can perform CQI estimation based on these interfered CRS or CSI-RS, the CQI measurement reflecting the interference from AP1, but actually AP1 may not introduce any interference on the physical downlink scheduling channel (PDSCH) transmission. So, for AP2, there may be a mismatch between the CQI estimation and thee actual interference situation on the PDSCH.

In a further embodiment, a two parts ICI awareness sequence on the downlink can be applied and UE reporting on the decision of the ICI from nearby APs can be utilized. The approach can be summarized as follows. The portable LTE-LAN APs send a predefined DL ICI awareness sequence on a predefined DL radio resource. This predefined radio resource can be on the same time and frequency resource for all portable LTE-LANs. The DL ICI awareness sequence can include two parts. The first part can be a sequence that is the same for all portable LTE-LANs. The second part can be a sequence that is different for different portable LTE-LANs. The UE can detect the power of DL ICI awareness sequence part 1 and part 2. If the power difference between part 1 and part 2 exceeds a criterion, the UE can know there is a nearby interfering AP and report it to the eNB.

By adding UE reporting into the ICI decision process, the ICI awareness difference between AP and UE side can be compensated accordingly.

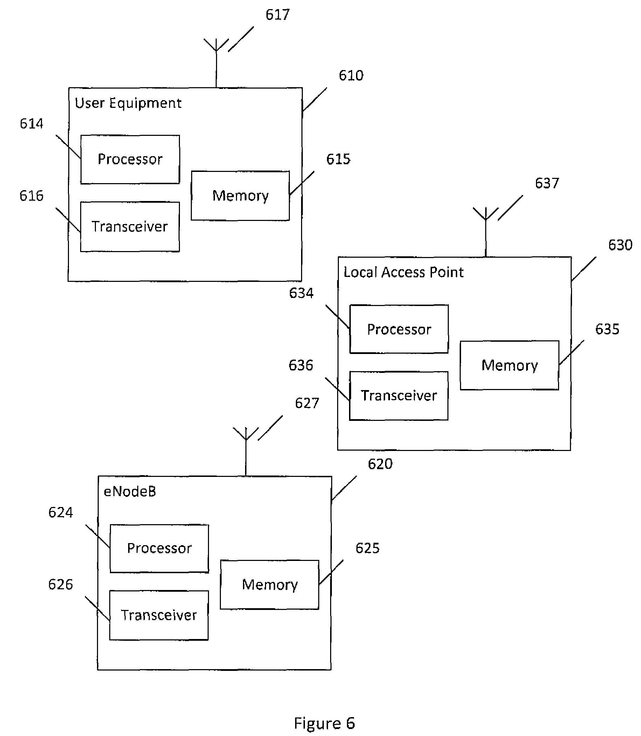

Figure 6 illustrates a system according to certain embodiments. In an example embodiment, a system may include multiple devices, such as one more user equipment (UE) 610, eNodeB 620, which may be a macro eNB, and local access point 630, which maybe an LTE-LAN device, and may also include the functionalities of a UE. Each of the devices 610, 620, and 630 may be equipped with at least one processor (respectively 614, 624, and 634), at least one memory (respectively 615, 625, and 635) (including computer program instructions or code), a transceiver (respectively 616, 626, and 636), and an antenna (respectively 617, 627, and 637). There is no requirement that each of these devices be so equipped. For example, the eNodeB 620 may be equipped for wired communication with a core network (not shown). Moreover, the devices may have multiple radios and antenna not shown.

The transceiver (respectively 616, 626, and 636) can be a transmitter, a receiver, both a transmitter and a receiver, or a unit that is configured both for transmission and reception. The transceiver (respectively 616, 626, and 636) can be coupled to corresponding one or more antenna(s) (respectively 617, 627, and 637), which may include a directional antenna.

The at least one processor (respectively 614, 624, and 634) can be variously embodied by any computational or data processing device, such as a central processing unit (CPU) or application specific integrated circuit (ASIC). The at least one processor (respectively 614, 624, and 634) can be implemented as one or a plurality of controllers.

The at least one memory (respectively 615, 625, and 635) can be any suitable storage device, such as a non-transitory computer-readable medium. For example, a hard disk drive (HDD) or random access memory (RAM) can be used in the at least one memory (respectively 615, 625, and 635). The at least one memory (respectively 615, 625, and 635) can be on a same chip as the corresponding at least one processor (respectively 614, 624, and 634), or may be separate from the corresponding at least one processor (respectively 614, 624, and 634).

The computer program instructions may be any suitable form of computer program code. For example, the computer program instructions may be a compiled or interpreted computer program.

The at least one memory (respectively 615, 625, and 635) and computer program instructions can be configured to, with the at least one processor (respectively 614, 624, and 634), cause a hardware apparatus (for example, user equipment 610, eNodeB 620, or local access point 630) to perform a process, such as any of the processes described herein (see, for example, Figures 4, 5, 7, and 8).

Thus, in certain embodiments, a non-transitory computer-readable medium can be encoded with computer instructions that, when executed in hardware perform a process, such as one of the processes described herein. Alternatively, certain embodiments of the present invention may be performed entirely in hardware.

The devices of the system may also include additional components. For example, each of user equipment 610, eNodeB 620, and local access point 630 can include a user interface that is operable connected to the processor (respectively 614, 624, and 634) and memory (respectively 615, 625, and 635). That user interface can include a display, such as a liquid crystal display (LCD) or organic electroluminescent display (OELD), as well as speakers or audio outputs. Tactile outputs, such as a haptic feedback system, can also be included. The user interface may have a touch screen to receive user input. User input can also be provided by a keypad, keyboard, microphone, joystick, mouse, trackball, or other input device. Of course, there is no requirement that the devices include a user interface. For example, the eNodeB 620 may be embodied in part as a rack-mounted computer.

The devices of the system can also include peripheral devices that are connected wirelessly by, for example, a short-range wireless connection. Thus the devices of the system can be configured with more than one radio system, and can be configured for operation in more than one mode.

Although Figure 6 illustrates a system including a base station, an LTE-LAN AP, and a terminal device, certain embodiments may be applicable to other embodiments. For example, in certain embodiments, the base station could be omitted. In such an embodiment, a plurality of LTE-LAN APs could coordinate as a cluster, with a cluster head performing similar functionality to a MeNb described above.

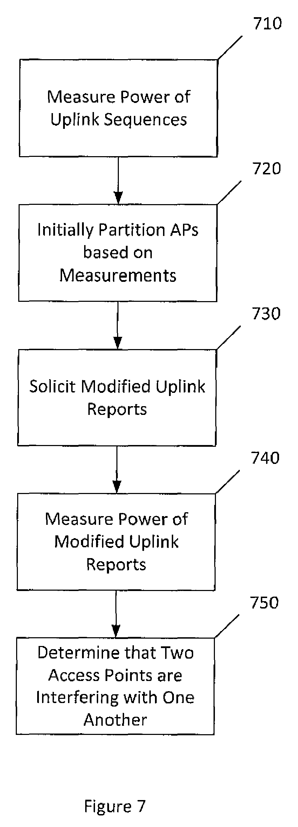

Figure 7 illustrates a method according to certain embodiments. The method of Figure 7 may be performed by, for example, a MeNB or a local access point, such as an LTE-LAN AP. The method can include, at 710, measuring, with a first local access point, a first power of a first uplink sequence and a second power of a second uplink sequence from at least one user equipment. As shown in Figure 5, this measurement can actually be performed at an access point. Thus, "measuring with" can be understood here to refer either to the actual measuring by the access point or to obtaining the measurements from the access point. For example, a serving access point can receive, measures, and compare between a first sub-sequence, which can correspond to part 1 in Figures 4 and 5, and a second sub-sequence, which can correspond to part 2 in Figures 4 and 5. For convenience, a sub-sequence can be referred to as a sequence. These sub-sequences, which can correspond to the first sequence and the second sequence, can be received from the access point's served user equipment as well as from a plurality of UEs under other access points. Because part I is the same for all access points, the serving access point can receive part 1 from all access points and combine the signal. For part 2, the sequence can be AP-specific. The serving access point, therefore, can only detect part 2 of its served UE, namely of the UE under the control/service of the access point. The access point may not, however, be able to detect part 2 of other UEs under other access points. The access point can then determine inter-AP interference by comparing the power of part 1 and part 2 it receives. Determination can be done based on a predefined criterion. The local access point can then report this to the MeNB.

The method can also include, at 750, determining that the first access point and the second access point are interfering with one another based on a comparison of the first power and the second power. As shown in Figure 5, this determination can initially be made by the MeNB. However, the MeNB can inform the access point of this interference with another access point either explicitly or implicitly through referring the access point to ICI coordination.

The method can also include, at 720, initially partitioning the first local access point and the second local access point into a candidate group based on the comparison of the first power and the second power. This can be performed by the MeNB, as shown in Figure 5. The initially partitioning can be based on a comparison between a first difference in power between the first sequence and the second sequence from first AP and a second difference in power between a third sequence and a fourth sequence from second AP. If the first difference is similar to the second difference, then the eNB can partition first AP and second AP into one candidate group. Here, the first sequence may refer to common Part 1 in figure 4 for the first AP; the second sequence may refer to random Part 2 in figure 4 for the second AP; the third sequence may refer to common Part 1 for the second AP; and the fourth sequence may refer to random Part 2 for the second AP. In certain embodiments, the first sequence for the first AP is the same as the third sequence for the second AP, and the second sequence for the first AP may be different with the fourth sequence for the second AP. In a particular example, the UL sequences measured by the APs can have three parts, and the initial partition can be based on whether the difference between the power of part I and part 3 of the uplink sequence is similar to one another.

The method can also include, at 730, soliciting a first modified uplink sequence for the first local access point and a second modified uplink sequence for the second local access point, based on the comparison of the first power and the second power. The MeNB can initially solicit further measurements from the access points, which can in in turn solicit further measurements from the user equipment. The modification can be a change, such as a swap, in the seed value used to generate a second part of the two part uplink sequence.

The method can further include, at 740, measuring a third power of a third uplink sequence with the first local access point and a fourth power of a fourth uplink sequence with the second local access point, wherein the third uplink sequence and the fourth uplink sequence were triggered based on the comparison of the first power and the second power. Here, the third uplink sequence may refer a first modified uplink sequence for the first local access point and the fourth uplink sequence may refer the second modified uplink sequence for the second local access point at 730. As with the previous measuring, as can be seen from Figure 5, the measuring can be performed by the access points, but can be reported to the MeNB. Thus, in this way, the MeNB can be said to "measure" the power of the uplink sequences using the access points. This measurement can be the measurement of the power using the swapped or changed seed for part 2.

The determining that the first access point and the second access point are interfering can be further based on a comparison of both the third power and the fourth power to a predetermined threshold. This comparison can be performed in the MeNB, as shown in Figure 5.

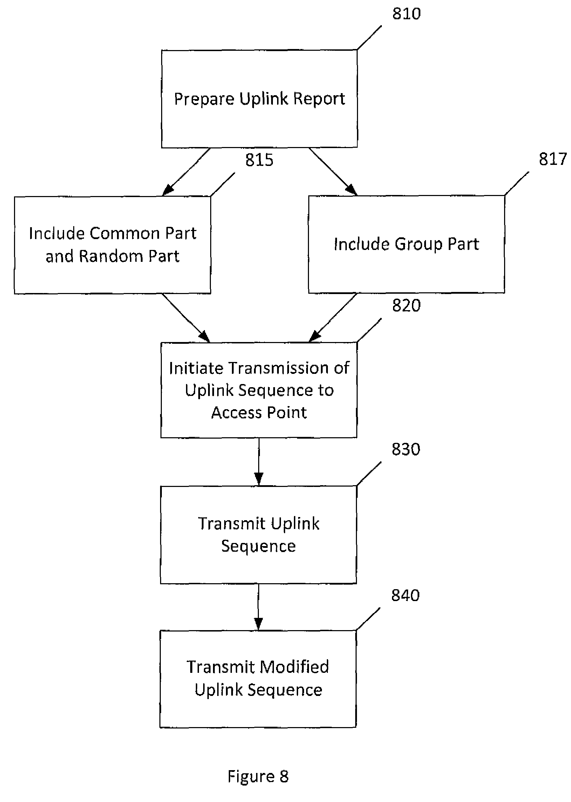

Figure 8 illustrates another method according to certain embodiments. The method of Figure 8 can be performed by, for example, a user equipment. As shown in Figure 8, the method can include, at 810, preparing an uplink sequence for transmission from a user equipment to an access point. The method can also include, at 815, including in the uplink sequence, a common first part and a random second part. The method can further include, at 820, initiating transmission of the uplink sequence to the access point.

The common first part can be a sequence common to at least one other access point than the access point, while the random second part can be a sequence that is different from a corresponding sequence in all other access points in a group of access points including the access point. The group can include more than one access point up to all the access points in the network. Alternatively, the group can include all of the access points within a geographic region.

The uplink sequence can be transmitted in the radio resource central resource blocks in the last symbol of subframe 1, as shown in Figure 4.

The method can also include, at 817, including in the uplink sequence a third part, wherein the third part comprises a sequence that is common to a plurality of access points but not common to all access points.

The method can also include, at 830, transmitting the uplink sequence to the access point. The method can further include, at 840, transmitting a modified uplink sequence to the access point.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

Glossary of Abbreviations

| | |
|---|---|
| ICI | Inter-cell interference |
| LTE-LAN | LTE local area network |
| LA | local area |
| DL | Downlink |
| UL | Uplink |
| MeNB | Macro eNB |
| GPS | Global positioning system |
| Hetnet | Heterogeneous Network |
| TTI | Transmission Time Interval |
| DMRS | Demodulation Reference Signal |
| SRS | Sounding reference signal |
| PATI | Portable AP Temporary ID |
| PAGI | Portable AP Group ID |
| PDSCH | Physical downlink shared channel |
| PUSCH | Physical uplink shared channel |
| AP | Access Point |

**Claims**

1.  A method, comprising:

    measuring, with a first local access point, a first power of a first uplink sequence and a second power of a second uplink sequence from at least one user equipment; and
    determining that the first local access point and a second local access point are interfering with one another based on a comparison of the first power and the second power.

2.  The method of claim 1, further comprising:

    initially partitioning the first local access point and the second local access point into a candidate group based on the comparison of the first power and the second power.

3.  The method of claim 2, wherein the initially partitioning is based on a comparison between a first difference in power between the first sequence and the second sequence from the first local access point and a second difference in power between a third sequence and a fourth sequence from the second local access point.

4.  The method of any of claims 1-3, further comprising:

    soliciting a first modified uplink sequence for the first local access point and a second modified uplink sequence for the second local access point, based on the comparison of the first power and the second power.

5.  A method, comprising:

    preparing an uplink sequence for transmission from a user equipment to an access point;
    including in the uplink sequence, a common first part and a random second part; and
    initiating transmission of the uplink sequence to the access point.

6.  The method of claim 5, wherein the including the common first part comprises including a sequence common to at least one other access point than the access point.

7.  The method of claim 5 or claim 6, wherein the including the random second part comprises including a sequence that is different from a corresponding sequence in all other access points in a group of access points including the access point.

8.  The method of any of claims 5-7, wherein the initiating transmission of the uplink sequence to the access point comprises initiating transmission of the radio resource central resource blocks in the last symbol of subframe 1.

9.  The method of any of claims 5-8, further comprising:

    including in the uplink sequence a third part, wherein the third part comprises a sequence that is common to a plurality of access points but not common to all access points.

10. A non-transitory computer-readable medium encoded with instructions that, when performed in hardware, perform a process, the process comprising the method according to any of claims 1-9.

11. An apparatus, comprising:

    measuring means for measuring, with a first local access point, a first power of a first uplink sequence and a second power of a second uplink sequence from at least one user equipment; and
    determining means for determining that the first local access point and a second local access point are interfering with one another based on a comparison of the first power and the second power.

12. The apparatus comprising means for performing method according to any of claims 2-4.

13. An apparatus for communications, comprising:

preparing means for preparing an uplink sequence for transmission from a user equipment to an access point;
including means for including in the uplink sequence, a common first part and a random second part; and
initiating means for initiating transmission of the uplink sequence to the access point.

**14.** The apparatus comprising means for performing method according to any of claims 6-9.


**Patentansprüche**

**1.** Verfahren, umfassend:

Messen, mit einem ersten lokalen Zugangspunkt, einer ersten Leistung einer ersten Aufwärtsstrecken-Sequenz und einer zweiten Leistung einer zweiten Aufwärtsstrecken-Sequenz von wenigstens einem Benutzer-Equipment; und
Bestimmen, dass sich der erste lokale Zugangspunkt und ein zweiter lokaler Zugangspunkt gegenseitig beeinflussen, basierend auf einem Vergleich der ersten Leistung mit der zweiten Leistung.

**2.** Verfahren nach Anspruch 1, ferner umfassend:

anfängliches Einteilen des ersten lokalen Zugangspunkts und des zweiten lokalen Zugangspunkts in eine Kandidatengruppe basierend auf dem Vergleich der ersten Leistung mit der zweiten Leistung.

**3.** Verfahren nach Anspruch 2, wobei das anfängliche Einteilen auf einem Vergleich einer ersten Leistungsdifferenz zwischen der ersten Sequenz und der zweiten Sequenz vom ersten lokalen Zugangspunkt mit einer zweiten Leistungsdifferenz zwischen einer dritten Sequenz und einer vierten Sequenz vom zweiten lokalen Zugangspunkt basiert.

**4.** Verfahren nach einem der Ansprüche 1-3, ferner umfassend:

Abfragen einer ersten modifizierten Aufwärtsstrecken-Sequenz für den ersten lokalen Zugangspunkt und einer zweiten modifizierten Aufwärtsstrecken-Sequenz für den zweiten lokalen Zugangspunkt basierend auf dem Vergleich der ersten Leistung mit der zweiten Leistung.

**5.** Verfahren, umfassend:

Vorbereiten einer Aufwärtsstrecken-Sequenz zur Übertragung von einem Benutzer-Equipment an einen Zugangspunkt;
Einbeziehen, in die Aufwärtsstrecken-Sequenz, eines gemeinsamen ersten Teils und eines willkürlichen zweiten Teils; und
Veranlassen der Übertragung der Aufwärtsstrecken-Sequenz an den Zugangspunkt.

**6.** Verfahren nach Anspruch 5, wobei das Einbeziehen des gemeinsamen ersten Teils das Einbeziehen einer Sequenz umfasst, die wenigstens einem anderen Zugangspunkt als dem Zugangspunkt gemeinsam ist.

**7.** Verfahren nach Anspruch 5 oder Anspruch 6, wobei das Einbeziehen des willkürlichen zweiten Teils das Einbeziehen einer Sequenz umfasst, die sich von einer entsprechenden Sequenz in allen anderen Zugangspunkten in einer Gruppe von Zugangspunkten unterscheidet, die den Zugangspunkt einschließt.

**8.** Verfahren nach einem der Ansprüche 5-7, wobei das Veranlassen der Übertragung der Aufwärtsstrecken-Sequenz an den Zugangspunkt das Veranlassen der Übertragung der zentralen Ressourcenblöcke der Funkressource im letzten Symbol des Teilrahmens 1 umfasst.

**9.** Verfahren nach einem der Ansprüche 5-8, ferner umfassend:

Einbeziehen, in die Aufwärtsstrecken-Sequenz, eines dritten Teils, wobei der dritte Teil eine Sequenz umfasst, die mehreren Zugangspunkten, jedoch nicht allen Zugangspunkten, gemeinsam ist.

**10.** Nichtflüchtiger computerlesbarer Datenträger, der mit Anweisungen codiert ist, die, wenn sie in einer Hardware ausgeführt werden, einen Prozess ausführen, wobei der Prozess das Verfahren gemäß einem der Ansprüche 1-9 umfasst.

**11.** Vorrichtung, umfassend:

Messmittel zum Messen, mit einem ersten lokalen Zugangspunkt, einer ersten Leistung einer ersten Aufwärtsstrecken-Sequenz und einer zweiten Leistung einer zweiten Aufwärtsstrecken-Sequenz von wenigstens einem Benutzer-Equipment; und
Bestimmungsmittel zum Bestimmen, dass sich der erste lokale Zugangspunkt und ein zweiter lokaler Zugangspunkt gegenseitig beeinflussen, basierend auf einem Vergleich der ersten Leistung mit der zweiten Leistung.

**12.** Vorrichtung, die Mittel zum Ausführen des Verfahrens gemäß einem der Ansprüche 2-4 umfasst.

**13.** Vorrichtung für die Kommunikation, umfassend:

Vorbereitungsmittel zum Vorbereiten einer Aufwärtsstrecken-Sequenz zur Übertragung von einem Benutzer-Equipment an einen Zugangspunkt;
Einbeziehungsmittel zum Einbeziehen, in die Aufwärtsstrecken-Sequenz, eines gemeinsamen ersten Teils und eines willkürlichen zweiten Teils; und
Veranlassungsmittel zum Veranlassen der Übertragung der Aufwärtsstrecken-Sequenz an den Zugangspunkt.

**14.** Vorrichtung, die Mittel zum Ausführen des Verfahrens gemäß einem der Ansprüche 6-9 umfasst.


**Revendications**

**1.** Procédé comprenant les étapes suivantes :

mesurer, avec un premier point d'accès local, une première puissance d'une première séquence de liaison montante et une seconde puissance d'une deuxième séquence de liaison montante à partir d'au moins un équipement utilisateur ; et
déterminer que le premier point d'accès local et un second point d'accès local interfèrent l'un avec l'autre sur la base d'une comparaison entre la première puissance et la seconde puissance.

**2.** Procédé selon la revendication 1, comprenant en outre l'étape suivante :

partitionner initialement le premier point d'accès local et le second point d'accès local en un groupe candidat sur la base de la comparaison de la première puissance et de la seconde puissance.

**3.** Procédé selon la revendication 2, dans lequel le partitionnement initial est basé sur une comparaison entre une première différence de puissance entre la première séquence et la deuxième séquence depuis le premier point d'accès local et une seconde différence de puissance entre une troisième séquence et une quatrième séquence depuis le second point d'accès local.

**4.** Procédé selon l'une quelconque des revendications 1 à 3, comprenant en outre l'étape suivante :

solliciter une première séquence de liaison montante modifiée pour le premier point d'accès local et une deuxième séquence de liaison montante modifiée pour le second point d'accès local, sur la base de la comparaison de la première puissance et de la seconde puissance.

**5.** Procédé comprenant les étapes suivantes :

préparer une séquence de liaison montante pour une transmission depuis un équipement utilisateur vers un point d'accès ;
inclure, dans la séquence de liaison montante, une première partie commune et une seconde partie aléatoire ; et
initier une transmission de la séquence de liaison montante vers le point d'accès.

**6.** Procédé selon la revendication 5, dans lequel inclure la première partie commune comprend d'inclure une séquence commune à au moins un autre point d'accès que le point d'accès.

7. Procédé selon la revendication 5 ou la revendication 6, dans lequel inclure la seconde partie aléatoire comprend d'inclure une séquence qui est différente d'une séquence correspondante dans tous les autres points d'accès dans un groupe de points d'accès comprenant le point d'accès.

8. Procédé selon l'une quelconque des revendications 5 à 7, dans lequel la transmission initiale de la séquence de liaison montante vers le point d'accès comprend une transmission initiale des blocs de ressources du central de ressources radio dans le dernier symbole de la sous-trame 1.

9. Procédé selon l'une quelconque des revendications 5 à 8, comprenant en outre l'étape suivante :

   inclure, dans la séquence de liaison montante, une troisième partie, où la troisième partie comprend une séquence qui est commune à une pluralité de points d'accès mais qui n'est pas commune à tous les points d'accès.

10. Support lisible par ordinateur non transitoire codé avec des instructions qui, lorsqu'elles sont exécutées par un matériel, exécutent un processus, le processus comprenant le procédé selon l'une quelconque des revendications 1 à 9.

11. Appareil, comprenant:

   un moyen de mesure pour mesurer, avec un premier point d'accès local, une première puissance d'une première séquence de liaison montante et une seconde puissance d'une deuxième séquence de liaison montante depuis au moins un équipement utilisateur ; et
   un moyen de détermination pour déterminer que le premier point d'accès local et un second point d'accès local interfèrent l'un avec l'autre sur la base d'une comparaison entre la première puissance et la seconde puissance.

12. Appareil comprenant un moyen pour exécuter le procédé selon l'une quelconque des revendications 2 à 4.

13. Appareil de communication, comprenant :

   un moyen de préparation pour préparer une séquence de liaison montante pour une transmission depuis un équipement utilisateur vers un point d'accès ;
   un moyen d'inclusion pour inclure, dans la séquence de liaison montante, une première partie commune et une seconde partie aléatoire ; et
   un moyen d'initiation pour initier une transmission de la séquence de liaison montante vers le point d'accès.

14. Appareil comprenant un moyen pour exécuter le procédé selon l'une quelconque des revendications 6 à 9.

Figure 1

EP 2 832 134 B1

Figure 2

Figure 3

Figure 4

Figure 5

617

610

User Equipment

614

Processor

615

616

Memory

Transceiver

637

630

Local Access Point

634

Processor

635

636

Memory

Transceiver

627

620

eNodeB

624

Processor

625

626

Memory

Transceiver

Figure 6

710

Measure Power of
Uplink Sequences

720

Initially Partition APs
based on
Measurements

730

Solicit Modified Uplink
Reports

740

Measure Power of
Modified Uplink
Reports

750

Determine that Two
Access Points are
Interfering with One
Another

Figure 7

810

Prepare Uplink Report

815

Include Common Part
and Random Part

817

Include Group Part

820

Initiate Transmission of
Uplink Sequence to
Access Point

830

Transmit Uplink
Sequence

840

Transmit Modified
Uplink Sequence

Figure 8

**EP 2 832 134 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011250913 A1